# EUROPÄISCHE PATENTANMELDUNG

(11) **EP 3 812 306 A1**
(43) Veröffentlichungstag der Anmeldung: **28.04.2021**
(21) Anmeldenummer: 19205237.1
(22) Anmeldetag: 25.10.2019
(51) Int. Cl.: B65G 1/04, B65G 57/30

(54) **STAPELLAGERANORDNUNG**

(71) Anmelder: Jungheinrich Aktiengesellschaft, 22047 Hamburg (DE)
(72) Erfinder: Cavelius, Jörg, 61118 Bad Vilbel (DE); Becker, Michael, 63512 Hainburg (DE); Liebhaber, Markus, 61440 Oberursel (DE)
(74) Vertreter: Keil & Schaafhausen Patentanwälte PartGmbB

(57) **Zusammenfassung**

Es wird eine Stapellageranordnung (1) mit mehreren Behälteraufnahmeräumen (2) angegeben, die in mehreren Reihen (3) und Spalten (4) angeordnet sind, wobei unter den Behälteraufnahmeräumen (2) ein Beschickungsraum angeordnet ist, in dem mindestens ein Beschickungsfahrzeug (8) verfahrbar ist.

Man möchte den Betrieb einer derartigen Stapellageranordnung wirtschaftlich gestalten können.

Hierzu ist vorgesehen, dass das Beschickungsfahrzeug (8) zumindest außerhalb des Beschickungsraums in eine Richtung verfahrbar ist, die einen beliebigen Winkel mit einer Richtung, die parallel zu den Reihen (3) verläuft, einschließt.

## Beschreibung

Die vorliegende Erfindung betrifft eine Stapellageranordnung mit mehreren Behälteraufnahmeräumen, die in mehreren Reihen und Spalten angeordnet sind, wobei unter den Behälteraufnahmeräumen ein Beschickungsraum angeordnet ist, in dem mindestens ein Beschickungsfahrzeug verfahrbar ist.

Eine Stapellageranordnung dient dazu, eine Vielzahl von Behältern aufzunehmen. Die Behälter können hierbei übereinandergestapelt werden, wobei die einzelnen Stapel in den Behälteraufnahmeräumen angeordnet sind. Auf diese Weise ist es möglich, den zur Verfügung stehenden Bauraum relativ gut auszunutzen, weil die Stapel eng benachbart zueinander angeordnet sein können.

Die Behälteraufnahmeräume sind hierbei nach Art einer Matrix mit Reihen und Spalten angeordnet. Jeder Behälteraufnahmeraum befindet sich dann an einem Schnittpunkt einer Reihe mit einer Spalte.

Im vorliegenden Fall werden die Behälter von unten in die Behälteraufnahmeräume eingebracht und auch von unten aus den Behälteraufnahmeräumen entnommen. Hierzu wird jeweils ein Beschickungsfahrzeug verwendet, dass zum Einlagern eines Behälters den Behälter außerhalb des Beschickungsraums aufnimmt, dann gemeinsam mit dem Behälter in den Beschickungsraum einfährt, bis er an dem Behälteraufnahmeraum angekommen ist, in dem der betreffende Behälter eingelagert werden soll. Das Beschickungsfahrzeug hebt dann den Behälter an, bis der Behälter von unten an einen Stapel von Behältern anstößt, der bereits im Behälteraufnahmeraum angeordnet ist. Der Behälter wird dann gemeinsam mit dem Behälterstapel angehoben, bis er an einer Haltereinrichtung vorbeigeführt worden ist, die den Behälter mit dem darauf befindlichen Stapel gegen die Schwerkraft festhält. Wenn in dem Behälteraufnahmeraum noch kein Behälter vorhanden ist, dann wird nur der betreffende Behälter festgehalten.

Zum Auslagern des Behälters wird wiederrum das Beschickungsfahrzeug verwendet, das unter den Behälterstapel gefahren wird und den Behälterstapel gemeinsam mit den zu entnehmenden oder auszulagernden Behälter anhebt. Der Behälter wird angehoben, bis er von der Haltevorrichtung freikommt. Die Haltevorrichtung kann dann gelöst werden und der Behälter wird mit dem darüber befindlichen Stapel abgesenkt. Dabei kommt die Halteeinrichtung in Eingriff mit dem bislang vorletzten Behälter des Stapels von unten, so dass der verbleibende Stapel im Behälteraufnahmeraum gehalten wird.

Das Beschickungsfahrzeug mit dem auszulagernden Behälter wird dann aus dem Beschickungsraum herausgefahren.

Der Erfindung liegt die Aufgabe zu Grunde, den Betrieb einer Stapellageranordnung wirtschaftlich zu gestalten.

Diese Aufgabe wird bei einer Stapellageranordnung der eingangs genannten Art dadurch gelöst, dass das Beschickungsfahrzeug zumindest außerhalb des Beschickungsraums in eine Richtung verfahrbar ist, die einen beliebigen Winkel mit einer Richtung, die parallel zu den Reihen verläuft, einschließt.

Man kann das Beschickungsfahrzeug also innerhalb des Beschickungsraums in eine Richtung verfahren, die parallel zu den Reihen gerichtet ist. Mit anderen Worten kann das Beschickungsfahrzeug innerhalb des Beschickungsraums in einer Reihe verfahren werden, um einen Behälter von einer Spalte zur nächsten zu verfahren oder um den Behälter aus dem Beschickungsraum heraus oder ihn in den Beschickungsraum hinein zu transportieren. Außerhalb des Beschickungsraums ist jedoch keine Richtungsgebundenheit mehr vorgesehen, sondern das Beschickungsfahrzeug kann außerhalb des Beschickungsraumes praktisch in jede beliebige Richtung verfahren werden. Dies schließt zwar auch die Richtung ein, die parallel zu den Reihen verläuft, es ist aber auch möglich, das Beschickungsfahrzeug in eine andere Richtung zu bewegen, so dass der auf dem Beschickungsfahrzeug befindliche Behälter auch an Orte verbracht werden oder von dort abgeholt werden kann, die praktisch beliebig außerhalb des Beschickungsraums verteilt sein können.

Vorzugsweise weist der Beschickungsraum einen Einfahrbereich auf, der an den Stirnseiten der Reihen und/oder Spalten angeordnet ist. Nur im Einfahrbereich kann das Beschickungsfahrzeug in dem Beschickungsraum einfahren. Dies vereinfacht die Steuerung des Beschickungsfahrzeugs.

Vorteilhafterweise ist das Beschickungsfahrzeug im Beschickungsraum zwischen Reihen verfahrbar. Auch innerhalb des Beschickungsraums kann man vorsehen, dass das Beschickungsfahrzeug die Reihen wechseln kann. Hierbei ist es zweckmäßig, dass das Beschickungsfahrzeug einerseits parallel zur Richtung der Reihen bewegt wird und andererseits parallel zur Richtung der Spalten. Diese beiden Richtungen stehen senkrecht zu einander.

Vorzugsweise weist der Beschickungsraum eine Fahrfläche auf, die sich außerhalb des Beschickungsraums fortsetzt. Die Fahrfläche kann beispielsweise durch einen Boden gebildet sein, auf dem Ständer der Stapellageranordnung aufstehen. Die Fahrfläche kann aber auch durch Schienen oder dergleichen gebildet sein, so dass man von der Qualität des Bodens unabhängig ist, was sich positiv auf die Positioniergenauigkeit der Beschickungsfahrzeuge auswirkt.

Hierbei ist bevorzugt, dass die Fahrfläche einen Abstand zu einem Boden aufweist, auf dem Ständer der Stapellageranordnung aufstehen, wobei die Fahrfläche in oder vor dem Einfahrbereich in den Boden übergeht. Die Fahrfläche kann dann beispielsweise mit einer kleinen Rampe mit geringer Steigung in den Boden übergehen, so dass sich das Beschickungsfahrzeug außerhalb der Fahrfläche frei auf dem Boden bewegen kann.

Vorzugsweise sind mehrere Einlager/Auslager-Anordnungen vorgesehen, von denen mindestens eine außerhalb einer Verlängerung einer Reihe angeordnet ist. Man ist also nicht mehr darauf beschränkt, die alle Einlager/Auslager-Anordnungen vor der Stapellageranordnung anzuordnen. Vielmehr ist es möglich, die Einlager/Auslager-Anordnungen dort zu positionieren, wo ein entsprechender Bauraum zur Verfügung steht und wo die jeweiligen Behälter beladen oder entladen werden können.

Vorzugsweise weist mindestens eine Einlager/Auslager-Anordnung mindestens eine Behälterübergabeposition zur Übergabe eines Behälters von der Einlager/Auslager-Anordnung zum Beschickungsfahrzeug oder umgekehrt auf. Das Beschickungsfahrzeug kann dann den Behälter an die Einlager/Auslager-Anordnung abgeben und steht dann zum Transport weiterer Behälter zur Verfügung. Das Beschickungsfahrzeug ist also nicht blockiert, solange eine Bedienungsperson Produkte oder Gegenstände in den Behälter einbringt oder aus dem Behälter entnimmt.

Hierbei ist bevorzugt, dass die Behälterübergabeposition eine Ablage aufweist, unter der eine Einfahrfläche für das Beschickungsfahrzeug angeordnet ist. Wie oben bereits erwähnt, wird die vorliegende Stapellageranordnung von unten versorgt, d. h. ein einzulagernder Behälter wird von unten in einen Behälteraufnahmeraum eingebracht und ein auszulagernder Behälter wird von unten aus dem Behälteraufnahmeraum entnommen. Dementsprechend weist das Beschickungsfahrzeug eine Möglichkeit auf, den Behälter anzuheben und abzusenken. Dies kann man für die Behälterübergabeposition ausnutzen. Das Beschickungsfahrzeug kann in die Behälterübergabeposition einfahren, wobei während des Einfahrens der Behälter höher angeordnet ist als eine Ablagefläche der Ablage. Wenn sich dann das Beschickungsfahrzeug auf der Einfahrfläche unterhalb der Ablage befindet, kann der Behälter abgesenkt werden, um ihn an die Ablage zu übergeben. Das Beschickungsfahrzeug kommt dann frei vom Behälter und kann für andere Vorgänge verwendet werden.

Vorzugsweise ist eine Auslageranordnung vor dem Einfahrbereich angeordnet. Dies ist insbesondere dann von Vorteil, wenn die Stapellageranordnung verwendet wird, um Produkte bereit zu halten, die beispielsweise von einem Versandhandel versendet werden sollen. In diesem Fall müssen die meisten Behälter öfter in die Auslageranordnung verbracht werden, in der eine Bedienungsperson oder eine automatische Handhabe Produkte aus dem Behälter entnehmen können, als in eine Einlageranordnung, wo der Behälter mit den entsprechenden Produkten bestückt werden kann. Wenn man die Auslageranordnung vor dem Einfahrbereich anordnet, werden die Wege zur Auslageranordnung kurzgehalten.

Hierbei ist bevorzugt, dass die Auslageranordnung zwischen dem Einfahrbereich und einem Transferelement angeordnet ist. Auf dem Transferelement können dann Auftrags- oder Versandbehälter bereitgestellt werden, in die die entsprechenden Produkte eingebracht werden. Das Transferelement kann dann den Auftrags- oder Versandbehälter zu einer Versandstation bringen oder zu einer anderen Auslageranordnung, in der weitere Produkte in den Auftrags- oder Versandbehälter, beispielsweise einen Karton, eingelegt werden können.

Vorzugsweise ist mindestens eine Einlageranordnung in einem Bereich angeordnet, der sich parallel zu den Reihen erstreckt. Die Einlageranordnung kann also neben den Reihen angeordnet sein. Sie kann aber auch neben dem Einfahrbereich angeordnet sein. In der Einlageranordnung werden Produkte in einen Behälter eingelagert. Die Einlageranordnung wird dann hauptsächlich unter dem Gesichtspunkt ausgewählt, wie man die einzulagernden Produkte einfach und/oder kostengünstig bereitstellen kann.

Vorzugsweise ist eine Steuereinrichtung vorgesehen, die eine Position eines Behälters in den Behälteraufnahmeräumen in Abhängigkeit von einer Umschlagshäufigkeit des Behälters festlegt. Damit ist es möglich, die Zeiten, die man benötigt, um einen Behälter aus der Stapellageranordnung zu entnehmen, zu optimieren. Die Steuereinrichtung legt die Position eines Behälters, der eine hohe Umschlagshäufigkeit aufweist, so fest, dass er zur Entnahme aus der Stapellageranordnung weniger Zeit benötigt, als ein Behälter, der weniger häufig umgeschlagen wird.

Hierbei ist bevorzugt, dass die Steuereinrichtung die Position eines Behälters mit einer hohen Umschlagshäufigkeit in einem unteren Bereich eines Behälteraufnahmeraums festlegt. Damit müssen wenige Behälter umgestapelt werden, wenn der betreffende Behälter aus dem Behälteraufnahmeraum entnommen wird. Wenn der zu entnehmende Behälter ohnehin der untere Behälter eines Stapels ist, müssen überhaupt keine Umstapelvorgänge vorgenommen werden. Dies spart Zeit.

Auch ist von Vorteil, wenn die Steuereinrichtung die Position eines Behälters mit einer hohen Umschlagshäufigkeit in einer Spalte festlegt, die näher am Einfahrbereich liegt als die Position eines Behälters mit niedriger Umschlagshäufigkeit. In diesem Fall können die Zeiten kurzgehalten werden, die das Beschickungsfahrzeug von der jeweiligen Spalte bis zum Einfahrbereich benötigt.

Vorzugsweise ermittelt die Steuereinrichtung die Umschlagshäufigkeit von Behältern dynamisch im Betrieb. Man muss also die Umschlagshäufigkeit der jeweiligen Behälter nicht von vornherein kennen. Die Steuereinrichtung stellt vielmehr fest, welche Behälter oft und welche Behälter weniger oft benötigt werden und richtet danach die Positionierung der Behälter in der Stapellageranordnung ein.

Dies kann dazu führen, dass die Behälter zunächst wahlfrei in den Reihen, Spalten und Stapelpositionen verteilt sind und sich erst im Laufe des Betriebs eine Umverteilung nach den oben geschilderten Kriterien ergibt.

Die Erfindung wird im Folgenden anhand eines bevorzugten Ausführungsbeispiels in Verbindung mit der Zeichnung beschrieben. Hierin zeigen:
- Fig. 1: eine schematische Draufsicht auf eine Stapellageranordnung, und
- Fig. 2: eine schematische Seitenansicht der Stapellageranordnung nach Fig 1.

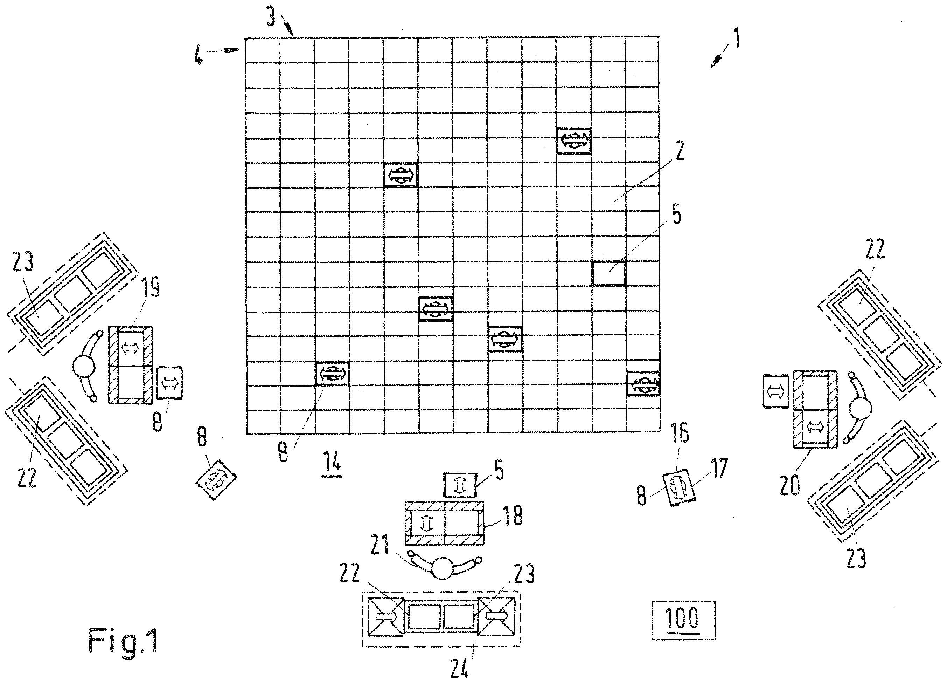

Fig. 1 zeigt eine Stapellageranordnung 1 mit einer Vielzahl von Behälteraufnahmeräumen, die in Reihen 3 und Spalten 4 angeordnet sind. Die Behälteraufnahmeräume 2 sind also matrixartig angeordnet. In den Behälteraufnahmeräumen 2 können Behälter 5 eingelagert werden. Hierbei können mehrere Behälter 5 in Form eines Stapels 6 übereinander angeordnet werden.

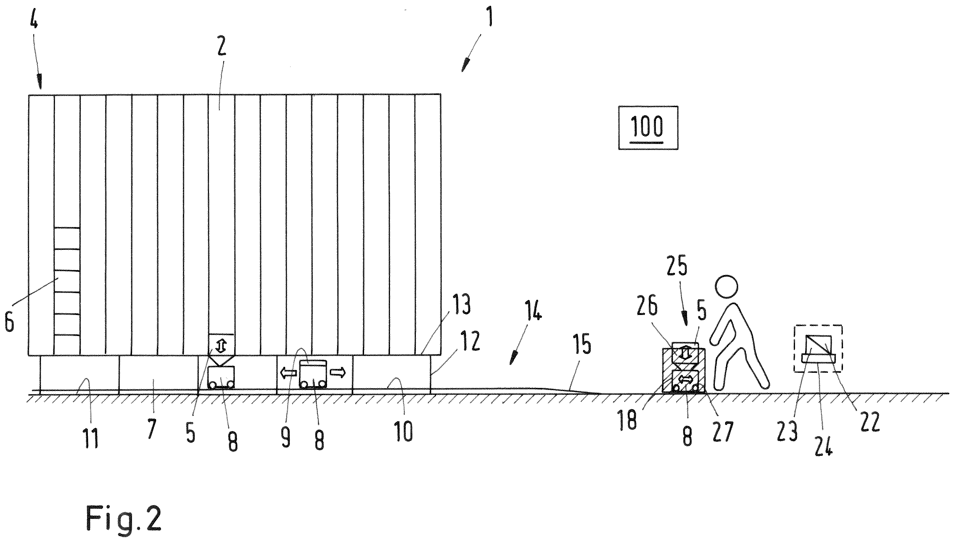

Unterhalb der Behälteraufnahmeräumen 2 ist ein Beschickungsraum 7 (Fig. 2) vorgesehen, in dem ein oder mehrere Beschickungsfahrzeuge 8 verfahrbar sind. Jedes Beschickungsfahrzeug 8 weist eine Behälteraufnahme 9 auf, die höhenveränderlich ist. Mit der Behälteraufnahme 9 lässt sich also ein Behälter 5 anheben oder absenken, wie dies weiter unten beschrieben werden wird.

Der Beschickunsraum 7 weist vorzugsweise eine Fahrfläche 10 auf, die sich außerhalb des Beschickungsraumes 7 fortsetzt, beispielsweise auf einem Fußboden 11. Die Fahrfläche 10 kann beispielsweise durch den Fußboden 11 selbst gebildet sein, auf dem Ständer 12 stehen, zwischen denen die Behälteraufnahmeräume 2 gebildet sind und die eine nur schematisch dargestellte Halteeinrichtung 13 tragen, mit denen die Behälter so gehalten werden, dass der Beschickungsraum 7 frei bleibt. Im vorliegenden Ausführungsbeispiel ist die Fahrfläche 10 jedoch oberhalb des Fußbodens 11 angeordnet und geht erst außerhalb des Beschickungsraums 7 in den Fußboden 11 über.

Die Beschickungsfahrzeuge 8 sind auf einer Fahrfläche 10 verfahrbar, die oberhalb eines Fußbodens 11 angeordnet ist. Die Fahrfläche 10 kann beispielsweise an Ständern 12 befestigt sein, die eine

Zum Einlagern eines Behälters 5 wird ein mit dem Behälter 5 beladenes Beschickungsfahrzeug 8 in den Beschickungsraum 7 eingefahren, bis der Behälter 5 an dem Behälteraufnahmeraum 2 angekommen ist, in dem er eingelagert werden soll. Der Behälter 5 wird dann angehoben, bis er an der Haltevorrichtung 13 vorbeigeführt worden ist. Die Haltevorrichtung 13 rastet dann beispielsweise in den Behälter 5 ein und hält ihn fest, wenn die Behälteraufnahme 9 abgesenkt wird.

Zum Auslagern des Behälters 5 wird wiederrum das Beschickungsfahrzeug 8 unter den entsprechenden Beschickungsraum 2 gefahren. Die Behälteraufnahme 9 wird angehoben, bis sie in Kontakt mit dem auszulagernden Behälter 5 kommt. Sie hebt dann den auszulagernden Behälter 5, ggf. mit einem darüber befindlichen Stapel 6, an, so dass die Haltevorrichtung 13 gelöst werden kann. Der auszulagernde Behälter 5 wird dann abgesenkt und die Haltevorrichtung 13 kommt dann in Eingriff mit dem bislang zweiten Behälter von unten, so dass der Stapel 6 wiederrum in dem Behälteraufnahmeraum 2 gehalten wird.

Wie man in Fig. 2 erkennen kann, kann das entsprechende Beschickungsfahrzeug 8 nur in einem Einfahrbereich 14 in den Beschickungsraum 7 eingefahren werden. Der Einfahrbereich 14 ist an den Stirnseiten der Reihen 3 angeordnet. Hierzu weist die Fahrfläche 10 eine Rampe 15 auf, mit der sie in den Boden 11 übergeht.

Alternativ oder zusätzlich kann man auch an den Stirnseiten der Spalten 4 einen (nicht dargestellten) Einfahrbereich vorsehen, so dass das Beschickungsfahrzeug 8 auch oder nur von den Seiten her in den Beschickungsraum eingefahren werden kann.

Außerhalb des Beschickungsraums 7, also ggf. auch im Bereich des Einfahrbereichs 14, können die Beschickungsfahrzeuge 8 praktisch in alle Richtungen bewegt werden. Dies ist in Fig. 1 durch zwei Pfeile 16, 17 dargestellt, die senkrecht zueinander gerichtet sind.

Ein Beschickungsfahrzeug 8 kann dementsprechend parallel zur Richtung der Reihen 3 bewegt werden, so dass es eine Bewegung aus einer Reihe 3 heraus gradlinig fortsetzen kann. Das Beschickungsfahrzeug 8 kann aber auch mit einer Richtungskomponente bewegt werden, die parallel zur Richtung der Spalten 4 ausgerichtet ist. Das Beschickungsfahrzeug 8 kann auch "schräg" zur Richtung der Reihen 3 und Spalten 4 bewegt werden, also sowohl mit der Richtung der Reihen 3 einen Winkel > 0° einschließen als auch mit der Richtung der Spalten 4 einen Winkel > 0°einschließen.

In Fig. 1 sind auch Beschickungsfahrzeuge, die sich unterhalb von Behälteraufnahmeräumen 2 befinden, mit den beiden Richtungspfeilen 16, 17 dargestellt. Dies bedeutet, dass auch ein im Beschickungsraum 7 befindliches Beschickungsfahrzeug 8 zwischen Reihen 3 verfahren werden kann. Die Bewegung eines im Beschickungsraum 7 befindlichen Beschickungsfahrzeugs 8 ist also nicht auf die Richtung der Reihen 3 beschränkt. Zweckmäßigerweise wird man das Beschickungsfahrzeug 8 parallel zur Richtung der Spalten 4 bewegen, wenn das Beschickungsfahrzeug 8 zwischen Reihen 3 bewegt werden soll.

Die in den Figuren 1 und 2 dargestellte Stapellageranordnung 1 weist mehrere Einlager/Auslager-Anordnungen 18, 19, 20 auf. Hierbei ist die Einlager/AuslagerAnordnung 18 als Auslagerposition vorgesehen, in die ein Behälter 5 gebracht wird, wenn eine Bedienungsperson 21 Produkte aus dem Behälter 5 entnehmen soll, um sie beispielsweise an einen Auftragsbehälter 22 (der auch als Versandbehälter bezeichnet werden kann) zu übergeben. Die Einlager/Auslager-Anordnungen 19, 20 sind hingegen als Einlagerpositionen vorgesehen, in denen ein Behälter 5 mit Produkten aus Quellbehältern 23 versorgt werden kann. Die Auslagerposition und die Einlagerpositionen sind jedoch baugleich ausgebildet, so dass man auch während des Betriebs die Funktion und Verwendung ändern kann. Um dies zu verdeutlichen, sind auch in den Einlager/Auslager-Anordnungen 19, 20 Auftragsbehälter 22 vorgesehen und in der Einlager/Auslager-Anordnung 18 ist ein Quellbehälter 23 vorgesehen.

Die Einlager/Auslager-Anordnung 18 befindet sich beispielsweise zwischen einem Transferelement 24 und dem Einfahrbereich 14. Dies ist insbesondere beim Entnehmen von Produkten aus einem Behälter 5 und beim Überführen der entsprechenden Produkte in den Auftragsbehälter 22 von Vorteil. Die Bedienungsperson 21 muss das Produkt lediglich aus dem Behälter 5 entnehmen und sich dann umdrehen, um das Produkt im Auftragsbehälter 22 ablegen zu können.

In der Regel wird ein Behälter 5 öfter benötigt, um ein Produkt aus ihm zu entnehmen als um Produkte in dem Behälter 5 einzulagern. Beim Einlagern kann man eine größere Anzahl von entsprechenden Produkten auf einmal in den Behälter 5 einlagern. Beim Auslagern werden in der Regel weniger Produkte aus dem Behälter 5 entnommen. Dementsprechend ist es zusätzlich von Vorteil, wenn man die Einlager/Auslager-Anordnung 18, die als Auslagerposition verwendet wird, in einer kurzen Entfernung zu den Behälteraufnahmeräumen 2 anordnet.

Wie oben erwähnt, sind die Einlager/Auslager-Anordnung 18-20 baugleich ausgebildet. Jede Einlager/Auslager-Anordnung 18-20 weist eine Behälterübergabeposition 25 mit einer Ablage 26 auf, unter der eine Einfahrfläche 27 vorgesehen ist. Die Einfahrfläche 27 kann auf dem Boden 11 gebildet sein.

Wenn das Beschickungsfahrzeug mit dem darauf befindlichen Behälter 5 in die Einlager/Auslager-Anordnung 18-20 eingefahren wird, dann hat das Beschickungsfahrzeug 8 den Behälter 5 soweit angehoben, dass er sich oberhalb der Ablage 26 befindet. Sobald das Beschickungsfahrzeug 8 in der Einlager/Auslager-Anordnung 18-20 angekommen ist, kann es den Behälter 5 absenken, so dass der Behälter 5 auf der Ablage 26 zum Stehen kommt. Das Beschickungsfahrzeug 8 ist dann frei für weitere Transport- oder Umstapelvorgänge. Wenn das Beschickungsfahrzeug 8 den Behälter 5 zum Einlagern wieder abholen soll, fährt es wieder unter die Ablage 26 hebt den Behälter an, so dass dieser von der Ablage 26 freikommt. Das Beschickungsfahrzeug 8 mit dem Behälter 5 kann dann aus der Einlager/Auslager-Anordnung 18-20 herausfahren.

Eine Steuereinrichtung 100 ist vorgesehen, die mit den Beschickungsfahrzeugen 8 leitungslos oder auch leitungsgebunden (beispielsweise über Leitschienen) in Verbindung steht. Die Steuereinrichtung 100 steuert die Beschickungsfahrzeuge 8, damit diese die Behälter 5 aus den Behälteraufnahmeräumen 2 abholen oder wieder in die Behälteraufnahmeräume 2 einlagern können.

Die Steuereinrichtung 100 bestimmt dabei die Position der Behälter 2 in den jeweiligen Behälteraufnahmeräumen 5 nach der Umschlagshäufigkeit der Behälter 5. Ein Behälter 5, der häufiger benötigt wird und damit eine hohe Umschlagshäufigkeit aufweist, wird in einem unteren Bereich eines Stapels 6 angeordnet.

Wenn ein Behälter 5 aus einem Behälteraufnahmeraum 2 entnommen werden soll und es sich um den unteren Behälter eines Stapels 6 handelt, ist der Auslagervorgang entsprechend kurz. Das Beschickungsfahrzeug 8 muss den unteren Behälter lediglich entnehmen und aus dem Beschickungsraum 7 heraus zu der Einlager/Auslager-Anordnung 18 transportieren.

Wenn der auszulagernde Behälter nicht der untere Behälter eines Stapels ist, sondern sich noch einige Behälter unterhalb des auszulagernden Behälters befinden, dann muss das Beschickungsfahrzeug 8 die jeweils unter dem auszulagernden Behälter befindlichen Behälter zunächst entnehmen und in anderen Behälteraufnahmeräumen 2 unterbringen, bevor es den auszulagernden Behälter entnehmen kann. Wenn genügend Beschickungsfahrzeuge 8 vorhanden sind, dann kann man die aktuell nicht benötigten Behälter, also die unter dem auszulagernden Behälter befindlichen Behälter, auch auf Beschickungsfahrzeugen 8 zwischenlagern.

Die gleichen Überlegungen gelten bei der Einlagerung der Behälter 5 in die Behälteraufnahmeräume 2.

Ein weiteres Kriterium für das Einlagern von Behältern 5 im Hinblick auf die Umschlagshäufigkeit ist die Entfernung der jeweiligen Behälteraufnahmeräume 2 vom Einfahrbereich 14. Je häufiger ein Behälter 5 benötigt wird, also je größer seine Umschlagshäufigkeit ist, desto näher wird der Behälter 5 an dem Einfahrbereich 14 angeordnet. Auf diese Weise lassen sich die Fahrzeiten für die Beschickungsfahrzeuge 8 klein halten.

In vielen Fällen wird die Umschlagshäufigkeit der jeweiligen Behälter 5 bekannt sein. Sie richtet sich nach den in den Behältern eingelagerten Produkten, von denen vielfach bekannt ist, wie häufig sie nachgefragt werden.

Die Steuereinrichtung 100 kann jedoch auch in der Lage sein, die Umschlagshäufigkeit der Behälter 5 während des Betriebs dynamisch zu ermitteln. In diesem Fall sind die Behälter 5 zunächst wahlfrei in den Behälteraufnahmeräumen 2 verteilt. Die Steuereinrichtung 100 zählt dann, wie oft ein Behälter 5 aus dem Behälteraufnahmeräumen 2 entnommen wird, und ändert dann beispielsweise die Position des Behälters 5 im Stapel 6 oder wählt einen anderen Behälteraufnahmeraum 2, um den Behälter 5 einzulagern.

## Patentansprüche

1. Stapellageranordnung (1) mit mehreren Behälteraufnahmeräumen (2), die in mehreren Reihen (3) und Spalten (4) angeordnet sind, wobei unter den Behälteraufnahmeräumen (2) ein Beschickungsraum (7) angeordnet ist, in dem mindestens ein Beschickungsfahrzeug (8) verfahrbar ist, **dadurch gekennzeichnet, dass** das Beschickungsfahrzeug (8) zumindest außerhalb des Beschickungsraums (7) in eine Richtung verfahrbar ist, die einen beliebigen Winkel mit einer Richtung, die parallel zu den Reihen (3) verläuft, einschließt.

2. Stapellageranordnung nach Anspruch 1, **dadurch gekennzeichnet, dass** der Beschickungsraum (7) einen Einfahrbereich (14) aufweist, der an den Stirnseiten der Reihen (3) und/oder Spalten (4) angeordnet ist.

3. Stapellageranordnung nach Anspruch 1 oder 2, **dadurch gekennzeichnet, dass** das Beschickungsfahrzeug (8) im Beschickungsraum (7) zwischen Reihen (3) verfahrbar ist.

4. Stapellageranordnung nach einem der Ansprüche 1 bis 3, **dadurch gekennzeichnet, dass** der Beschickungsraum (7) eine Fahrfläche (10) aufweist, die sich außerhalb des Beschickungsraums (7) fortsetzt.

5. Stapellageranordnung nach Anspruch 4, **dadurch gekennzeichnet, dass** die Fahrfläche (10) einen Abstand zu einem Boden (11) aufweist, auf dem Ständer (12) der Stapellageranordnung aufstehen, wobei sich die Fahrfläche (10) im oder vor dem Einfahrbereich (14) im Boden (11) fortsetzt.

6. Stapellageranordnung nach einem der Ansprüche 1 bis 5, **dadurch gekennzeichnet, dass** mehrere Einlager/Auslager-Anordnungen (18-20) vorgesehen sind, die von denen mindestens eine außerhalb einer Verlängerung einer Reihe angeordnet ist.

7. Stapellageranordnung nach Anspruch 6, **dadurch gekennzeichnet, dass** mindestens eine Einlager/Auslager-Anordnung (18-20) mindestens eine Behälterübergabeposition (25) zur Übergabe eines Behälters (5) von der Einlager/Auslager-Anordnung (18-20) zum Beschickungsfahrzeug (8) oder umgekehrt aufweist.

8. Stapellageranordnung nach Anspruch 7, **dadurch gekennzeichnet, dass** die Behälterübergabeposition (25) eine Ablage (26) aufweist, unter der eine Einfahrfläche (27) für das Beschickungsfahrzeug (8) angeordnet ist.

9. Stapellageranordnung nach einem der Ansprüche 1 bis 8, **dadurch gekennzeichnet, dass** eine Auslageranordnung (18) vordem Einfahrbereich (14) angeordnet ist.

10. Stapellageranordnung nach Anspruch 9, **dadurch gekennzeichnet, dass** die Auslageranordnung (18) zwischen dem Einfahrbereich (14) und einem Transferelement (24) angeordnet ist.

11. Stapellageranordnung nach einem der Ansprüche 1 bis 10, **dadurch gekennzeichnet, dass** mindestens eine Einlageranordnung (19, 20) in einem Bereich angeordnet ist, der sich parallel zu den Reihen (3) erstreckt.

12. Stapellageranordnung nach einem der Ansprüche 1 bis 11, **dadurch gekennzeichnet, dass** eine Steuereinrichtung (100) vorgesehen ist, die eine Position eines Behälters (5) in den Behälteraufnahmeräumen (2) in Abhängigkeit von einer Umschlagshäufigkeit des Behälters (5) festlegt.

13. Stapellageranordnung nach Anspruch 12, **dadurch gekennzeichnet, dass** die Steuereinrichtung (100) die Position eines Behälters (5) mit einer hohen Umschlagshäufigkeit in einem unteren Bereich eines Behälteraufnahmraumes (2) festlegt.

14. Stapellageranordnung nach Anspruch 12 oder 13, **dadurch gekennzeichnet, dass** die Steuereinrichtung (100) die Position eines Behälters (5) mit einer hohen Umschlagshäufigkeit in einer Spalte (4) festlegt, die näher am Einfahrbereich (14) liegt als die Position eines Behälters mit niedriger Umschlagshäufigkeit.

15. Stapellageranordnung nach einem der Ansprüche 12 bis 14, **dadurch gekennzeichnet, dass** die Steuereinrichtung (100) die Umschlagshäufigkeit von Behältern (5) dynamisch im Betrieb ermittelt.

## Geänderte Patentansprüche

### Geänderte Patentansprüche gemäss Regel 137(2) EPÜ.

1. Stapellageranordnung (1) mit mindestens einem Beschickungsfahrzeug und mehreren Behälteraufnahmeräumen (2) zur Aufnahme von mehreren Behältern (5) in Form eines Stapels (6), die in mehreren Reihen (3) und Spalten (4) angeordnet sind, wobei unter den Behälteraufnahmeräumen (2) ein Beschickungsraum (7) angeordnet ist, in dem das mindestens eine Beschickungsfahrzeug (8) verfahrbar ist, wobei das Beschickungsfahrzeug (8) zumindest außerhalb des Beschickungsraums (7) in eine Richtung verfahrbar ist, die einen beliebigen Winkel mit einer Richtung, die parallel zu den Reihen (3) verläuft, einschließt, **dadurch gekennzeichnet, dass** mehrere Einlager/Auslager-Anordnungen (18-20) vorgesehen sind, von denen mindestens eine mindestens eine Behälterübergabeposition (25) zur Übergabe eines Behälters (5) von der Einlager/Auslager-Anordnung (18-20) zum Beschickungsfahrzeug (8) oder umgekehrt aufweist und von denen mindestens eine außerhalb einer Verlängerung einer Reihe angeordnet ist.

2. Stapellageranordnung nach Anspruch 1, **dadurch gekennzeichnet, dass** der Beschickungsraum (7) einen Einfahrbereich (14) aufweist, der an den Stirnseiten der Reihen (3) und/oder Spalten (4) angeordnet ist.

3. Stapellageranordnung nach Anspruch 1 oder 2, **dadurch gekennzeichnet, dass** das Beschickungsfahrzeug (8) im Beschickungsraum (7) zwischen Reihen (3) verfahrbar ist.

4. Stapellageranordnung nach einem der Ansprüche 1 bis 3, **dadurch gekennzeichnet, dass** der Beschickungsraum (7) eine Fahrfläche (10) aufweist, die sich außerhalb des Beschickungsraums (7) fortsetzt.

5. Stapellageranordnung nach Anspruch 4, **dadurch gekennzeichnet, dass** die Fahrfläche (10) einen Abstand zu einem Boden (11) aufweist, auf dem Ständer (12) der Stapellageranordnung aufstehen, wobei sich die Fahrfläche (10) im oder vor dem Einfahrbereich (14) im Boden (11) fortsetzt.

6. Stapellageranordnung nach einem der Ansprüche 1 bis 5, **dadurch gekennzeichnet, dass** die Behälterübergabeposition (25) eine Ablage (26) aufweist, unter der eine Einfahrfläche (27) für das Beschickungsfahrzeug (8) angeordnet ist.

7. Stapellageranordnung nach einem der Ansprüche 1 bis 6, **dadurch gekennzeichnet, dass** eine Auslageranordnung (18) vor dem Einfahrbereich (14) angeordnet ist.

8. Stapellageranordnung nach Anspruch 7, **dadurch gekennzeichnet, dass** die Auslageranordnung (18) zwischen dem Einfahrbereich (14) und einem Transferelement (24) angeordnet ist.

9. Stapellageranordnung nach einem der Ansprüche 1 bis 8, **dadurch gekennzeichnet, dass** mindestens eine Einlageranordnung (19, 20) in einem Bereich angeordnet ist, der sich parallel zu den Reihen (3) erstreckt.

10. Stapellageranordnung nach einem der Ansprüche 1 bis 9, **dadurch gekennzeichnet, dass** eine Steuereinrichtung (100) vorgesehen ist, die eine Position eines Behälters (5) in den Behälteraufnahmeräumen (2) in Abhängigkeit von einer Umschlagshäufigkeit des Behälters (5) festlegt.

11. Stapellageranordnung nach Anspruch 10, **dadurch gekennzeichnet, dass** die Steuereinrichtung (100) die Position eines Behälters (5) mit einer hohen Umschlagshäufigkeit in einem unteren Bereich eines Behälteraufnahmraumes (2) festlegt.

12. Stapellageranordnung nach Anspruch 10 oder 11, **dadurch gekennzeichnet, dass** die Steuereinrichtung (100) die Position eines Behälters (5) mit einer hohen Umschlagshäufigkeit in einer Spalte (4) festlegt, die näher am Einfahrbereich (14) liegt als die Position eines Behälters mit niedriger Umschlagshäufigkeit.

13. Stapellageranordnung nach einem der Ansprüche 10 bis 12, **dadurch gekennzeichnet, dass** die Steuereinrichtung (100) die Umschlagshäufigkeit von Behältern (5) dynamisch im Betrieb ermittelt.
